# EUROPEAN PATENT SPECIFICATION

(11) **EP 3 182 764 B1**
(45) Date of publication and mention of the grant of the patent: **26.12.2018**
(21) Application number: 16197096.7
(22) Date of filing: 03.11.2016
(51) Int. Cl.: H04W 52/02, H04W 52/28, G06F 1/32

(54) **COMMUNICATION DEVICES HAVING AN ENERGY MANAGEMENT INTERFACE**
KOMMUNIKATIONSVORRICHTUNGEN MIT ENERGIEVERWALTUNGSSCHNITTSTELLE
DISPOSITIFS DE COMMUNICATION DOTÉS D'UNE INTERFACE DE GESTION DE L'ÉNERGIE

(30) Priority: 16.12.2015 US 201514970577
(43) Date of publication of application: 21.06.2017
(73) Proprietor: Intel Corporation, Santa Clara, CA 95054 (US)
(72) Inventor: JOHN, Sudhanshu, Beaverton, OR Oregon 97006 (US); GANESAN, Krishna Kumar, Hillsboro, Oregon 97123 (US); OMI, Yasuharu, Hillsboro, OR Oregon 97124 (US)
(74) Representative: Viering, Jentschura & Partner mbB Patent- und Rechtsanwälte

(56) References cited:
- US-A1- 2006 047 980
- US-B1- 8 738 093

## Description

### Technical Field

Various aspects of this disclosure relate generally to communication devices having an energy management interface.

### Background

With rapidly increasing wireless devices, regulations on human exposure to electromagnetic radiation have become more and more important. Federal Communications Commission (FCC) of the United States of America regulations dictate reduced output power levels for wireless devices in the presence of a human body. To get platform certifications and for regulatory compliance, wireless devices conventionally put static transmit power limit data in a device memory (either in an Electrically Erasable Programmable Read Only Memory (EEPROM) or in a flash memory) and apply it on a per frequency band / country basis.

One conventional approach to address this issue is to configure wireless devices to always operate at low enough power to pass regulations for close proximity use, but that approach may result in lower performance, range and throughput for the wireless device.

Another conventional approach is that wireless devices can operate at a higher power when they are far enough away from a human body, and at a lower power when notified of being in close proximity to a human body (which may be determined by means of proximity sensors, camera, touch, embedded controllers, interference detection, etc.). FCC regulations allow wireless devices to dynamically reduce a so-called Effective Isotropically Radiated Power (EIRP) when in close proximity to a human body to mitigate its adverse effects.

On a conventional current platform, a dedicated so-called Specific Absorption Rate (SAR) sensor for each wireless device is used for notifying the wireless device (either by interrupt or internal signaling via a General Purpose Input Output (GPIO) interface based configuration) that the system (e.g. a communication terminal device) is in close proximity to a human body. This solution, however, requires multiple SAR sensors for a system (e.g. a communication terminal device) that has a plurality of wireless devices (also referred to as wireless communication circuits), and does not provide any mechanism for the wireless devices to collaborate for a better efficiency.

US 8 738 093 B1 discloses that methods and systems for selecting a number of requests for transmission information by a user device when a presence of an object is detected are described. A user device detects a presence of object that absorbs electromagnetic radiation, and in response, selects a number of requests for transmission of additional information. The user device transmits the additional information at the specified transmit power level using the selected number of scheduled requests when the presence of the object is detected.

US 2006/047980 A1 discloses that power down to a reduced power state, such as a standby or off state, of an information handling system is delayed by a user-configured time after detection of closing of the cover of the information handling system.

In one embodiment, a cover delay module associated with the BIOS of the information handling system delays communication of the detection of the closing of the cover from the BIOS to a power manager of the operating system that commands the reduced power state. In another embodiment, the cover delay module integrates with the operating system power manager.

### Summary

A communication device is provided. The communication device may include at least one wireless communication circuit, an energy management interface coupled to the at least one wireless communication circuit, an operating system executed on the communication device, and a human proximity determination circuit configured to generate a human proximity signal upon detecting proximity of a human body part and to send the human proximity signal to the operating system. The energy management interface is configured to receive the human proximity signal from the operating system, and to notify the at least one wireless communication circuit based on the received human proximity signal,
wherein one or more wireless communication circuits of the plurality of wireless communication circuits are configured to, when an interference is detected among the plurality of wireless communication circuits, send a non-real-time message to the energy management interface, and
wherein the energy management is further configured to upon receipt of the non-real-time message, inform some or all of the other wireless communication circuits about a respective control of an operation of the wireless communication circuits,
wherein the energy management interface is configured to notify the plurality of wireless communication circuits to control a transmission power used by the plurality of wireless communication circuits.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a communication system including a plurality of communication devices;
FIG. 2 shows a communication terminal device;
FIG. 3 shows a block diagram illustrating the structure of the ACPI interface;
FIG. 4 shows a block diagram illustrating the data and event notification message flow between various components of the operating system and of the energy management interface;
FIG. 5 shows a message flow diagram illustrating the message flow between a WiFi driver circuit and the BIOS after the WiFi driver circuit has received a notification from the virtual ACPI device object;
FIG. 6 shows a block diagram illustrating a real-time messaging as well as a non-real-time messaging;
FIG. 7 shows a frequency diagram illustrating various frequency bands provided by different radio communication technologies;
FIG. 8 shows a block diagram illustrating the communication flow in accordance with various aspects of this disclosure;
FIG. 9 shows a flow diagram illustrating a method in accordance with various aspects of this disclosure;
FIG. 10 shows a flow diagram illustrating a method in accordance with various aspects of this disclosure; and
FIG. 11 shows a flow diagram illustrating a method in accordance with various aspects of this disclosure

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The word "over" used with regards to a deposited material formed "over" a side or surface, may be used herein to mean that the deposited material may be formed "directly on", e.g. in direct contact with, the implied side or surface. The word "over" used with regards to a deposited material formed "over" a side or surface, may be used herein to mean that the deposited material may be formed "indirectly on" the implied side or surface with one or more additional layers being arranged between the implied side or surface and the deposited material.

The components of the communication devices (e.g. the determination circuit or the application processor) may for example be implemented by one or more circuits. A "circuit" may be understood as any kind of a logic implementing entity, which may be special purpose circuitry or a processor executing software stored in a memory, firmware, or any combination thereof (e.g. an operating system). Thus a "circuit" may be a hardwired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

For purposes of this disclosure, radio communication technologies may be classified as one of a Short Range radio communication technology, Metropolitan Area System radio communication technology, or Cellular Wide Area radio communication technology (also referred to as Wireless Wide Area Network (WWAN) radio communication technology). Short Range radio communication technologies include Bluetooth, WLAN (Wireless Local Area Network) (e.g. according to any IEEE 802.11 standard or e.g. WiFi), and other similar radio communication technologies. Metropolitan Area System radio communication technologies include Worldwide Interoperability for Microwave Access (WiMax) (e.g. according to an IEEE 802.16 radio communication standard, e.g. WiMax fixed or WiMax mobile) and other similar radio communication technologies. Cellular Wide Area radio communication technologies include Global Sytem for Mobile Communications (GSM), Universal Mobile Telecommunications System (UMTS), Long Term Evolution (LTE), LTE-Advanced (LTE-A), Code Division Multiple Access (CDMA), Wideband CDMA (WCDMA), General Packet Radio Service (GPRS), Enhanced Data Rates for GSM Evolution (EDGE), High Speed Packet Access (HSPA), HSPA Plus (HSPA+), and other similar radio communication technologies.

The term "network" as utilized herein, e.g. in reference to a communication network such as a mobile communication network, is intended to encompass both an access section of a network (e.g. a radio access network (RAN) section) and a core section of a network (e.g. a core network section).

Unless explicitly specified, the term "transmit" encompasses both direct and indirect transmission. Similarly, the term "receive" encompasses both direct and indirect reception unless explicitly specified.

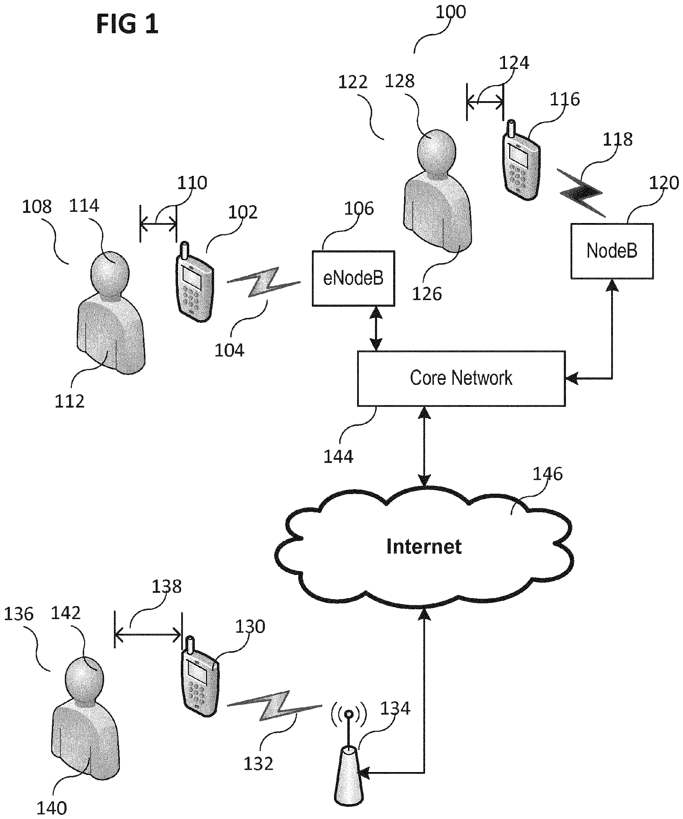

FIG. 1 shows a communication system 100 including a plurality of communication devices. A first communication terminal device 102 is coupled via a first radio connection 104 (e.g. via a first RAN) to a first base station 106 such as e.g. a Long Term Evolution (LTE) eNodeB 106 (LTE is one example of a Wireless Wide Area Network). A first user 108 holds the first communication terminal device 102 at a first distance (symbolized in FIG. 1 by a first double arrow 110) to his main body 112 or his head 114. A second communication terminal device 116 is coupled via a second radio connection 118 (e.g. via a second RAN) to a second base station 120 such as e.g. a Universal Mobile Telecommunications System (UMTS) NodeB 120. A second user 122 holds the second communication terminal device 116 at a second distance (symbolized in FIG. 1 by a second double arrow 124) to his main body 126 or his head 128. A third communication terminal device 130 is coupled via a third radio connection 132 (e.g. via a third RAN) to a third base station 134 such as e.g. a Wireless Local Area network Access Point 134. A third user 136 holds the third communication terminal device 130 at a third distance (symbolized in FIG. 1 by a third double arrow 138) to his main body 140 or his head 142. The first base station 106 and the second base station 120 are coupled to their respective core network (in FIG. 1 illustrated in a simplified manner by a single core network 144) and via that with the Internet 146. Furthermore, the third base station 134 is also connected to the Internet 146. In various aspects of this disclosure, an arbitrary number of communication terminal devices implementing a variety of differenct radio communication technologies may be coupled with each other or with various servers, e.g. Internet servers, e.g. via the Internet 146. It is to be noted that the communication terminal devices may implement any other desired WWAN communication technology, any other desired WLAN communication technology and/or any desired Short range mobile radio communication technology.

The communication terminal devices 102, 116, 130, may e.g. be any kind of mobile radio communication device such as e.g. a mobile phone, a smartphone, a tablet PC, or the like.

As mentioned above, the dynamic control of the output transmission power to transmit radio signals e.g. via the antenna 204 may be desired. By way of example, the FCC regulations dictate reduced output power levels for wireless devices in the presence of a human body, in other words, in case a distance (e.g. distance 110, 124, 138) between a radio communication device and a human body (e.g. the main body or the head) becomes too small. However, there are various other scenarios in which a dynamic control of the operation of the one or more communication circuits is desired, e.g. a dynamic control of the output transmit power of one or more communication circuits or a dynamic control of the transmission scheduling of one or more communication circuits. By way of example, an interference of several communication circuits being operated at the same time and/or in similar or close frequency bands may occur and may require a dynamic control of the transmit power and/or of the transmission timing of one or more of the interfering communication circuits.

Therefore, various aspects of this disclosure may provide communication devices configured to dynamically control the behaviour (e.g. the transmit power) of one or more communication circuits. The control is provided by a virtual device provided in an energy management interface, e.g. the Advanced Configuration and Power Interface (ACPI). Thus, a hard wired controller in each communication circuit may be avoided. The virtual device (which may be an object component implemented in the energy management interface, e.g. an ACPI object) may be configured to receive a power control event (such as e.g. an event indicating that the communication device is too close to the human body and requires the dynamic control of the transmit power of one or more communication circuits) and to inform or to control the one or more communication circuits about this event. This implementation also simplifies any amendment of the power control strategies provided in the communication device, since only the virtual device would need to be amended, which would merely mean an amendment of software, not of hardware. In various aspects of this disclosure, an interface object component may be embodied in hardware and/or software and/or system related software, also referred to as firmware. An interface object component may be embodied in a specific interface language, e.g. as an ACPI object.

Illustratively, various aspects of this disclosure may provide to coalesce human proximity sensing, e.g. WiFi RSSI (Received Signal Strength Indication) calibration (also referred to as a WiFi proximity sensing), e.g. WWAN proximity sensing and regulation of the communication circuit power (e.g. its transmission power) via a dynamic SAR sensor or any other sensing device on a given platform using a single virtual ACPI device based event mechanism that can broadcast to all wireless communication circuits in a system, e.g. in a communication device, which will be described in more detail below. Various aspects may allow a dynamic detection of power transmission in e.g. FCC regulated operating frequency bands and collaboration in all coexistence scenarios for interference mitigation related to e.g. the communication standards IEEE 802.11a/b/g/n/ac, LTE / ISM, Bluetooth, etc. Conventional approaches to solving these issues have used different hardware modules with static power limit tables that may compromise the performance of the communication device to achieve certification. Production units have to provide the tables with changed transmit (Tx) power limits and maintain the database for different scenarios of proximity sensing, RSSI based sensing and coexistence issues.

Various aspects of this disclosure may avoid dedicated hardware routing to each communication circuit to utilize the sensing capabilities and share it with all the communication circuits in the communication device as opposed to platform-specific and operating system (OS) specific implementations. By way of example, ACPI compliant Intel Architecture (IA) platforms may benefit from this platform and OS agnostic method of meeting regulatory requirements and interference mitigation requirements without sacrificing communication circuits' performance.

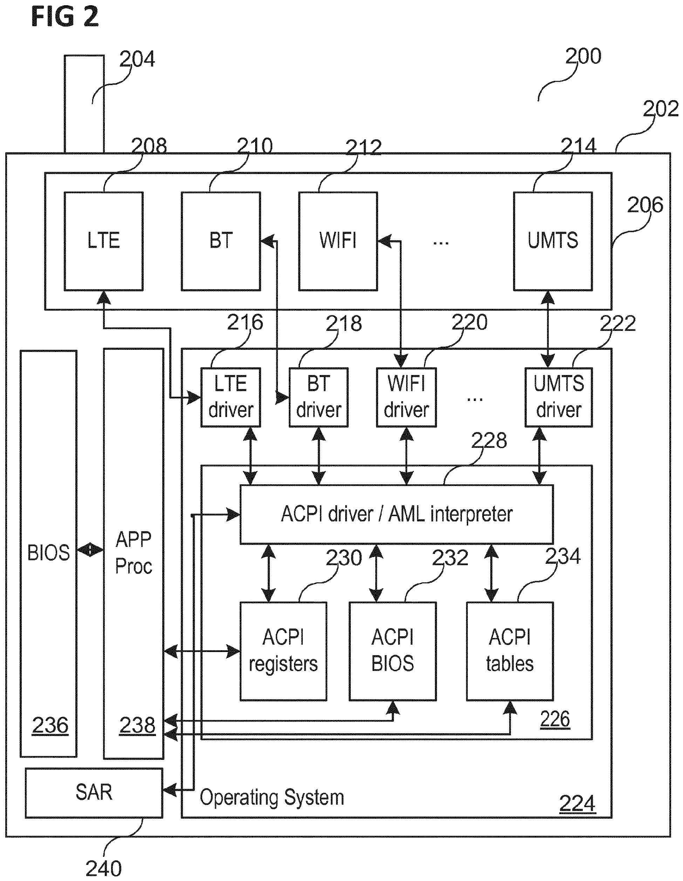

FIG. 2 shows a communication terminal device 200 such as the communication terminal devices 102, 116, 130 of FIG. 1.

The communication terminal device 200 may include a housing 202 and an antenna 204 as well as a display and all as such conventional components provided in a mobile radio phone for the normal operation of the communication terminal device 200 (some of them are not shown in FIG. 2). By way of example, the communication terminal device 200 may include one or a plurality of wireless communication circuits 206 such as e.g. one or more WWAN communication circuits (implementing one or more WWAN radio communication technologies as described above), and/or one or more Metropolitan Area System communication circuits (implementing one or more Metropolitan Area System radio communication technologies as described above), and/or one or more Short Range communication circuits (implementing one or more Short Range radio communication technologies as described above). In the example shown in FIG. 2, the communication terminal device 200 may include an LTE communication circuit 208 (implementing an LTE communication protocol stack), a Bluetooth (BT) communication circuit 210 (implementing a Bluetooth communication protocol stack), a WiFi communication circuit 212 (implementing a WiFi communication protocol stack), and a UMTS communication circuit 214 (implementing a UMTS communication protocol stack). However, it is to be noted that the communication terminal device 200 may include any other type of radio communication circuit instead of or in addition to those shown in FIG. 2.

As shown in FIG. 2, a communication circuit driver circuit may be assigned to each communication circuit 206. The respective communication circuit may be configured to drive the respective communication circuit e.g. with respect to the transmission power used by the respective communication circuit to transmit radio signals, e.g. via the antenna 204. By way of example, the communication terminal device 200 may include an LTE driver circuit 216 coupled with and configured to control the LTE communication circuit 208, a BT driver circuit 218 coupled with and configured to control the BT communication circuit 210, a WiFi driver circuit 220 coupled with and configured to control the WiFi communication circuit 212, and a UMTS driver circuit 222 coupled with and configured to control the UMTS communication circuit 214.

Furthermore, the communication terminal device 200 may include an operating system 224. In general, any kind of operating system 224 may be provided such as a Windows operating system (e.g. Windows 10, Windows Phone (e.g. Windows Phone 8.0, Windows Phone 8.1, Windows Phone 7.0, etc.), Windows 2000, Windows XP, Windows Vista, Windows 7, Windows 8, Windows 8.1), a Linux-based or Unix-based operating system, a BSD-based operating system, an Android operating system, an Apple iOS operating system. The driver circuits 216, 218, 220, 222 may be part of the operating system 224.

The operating system 224 may at least partially include or at least partially implement an energy management interface 226 providing an interface for hardware recognition, device configuration and energy management. The energy management interface 226 is coupled to the at least one communication circuit 206, e.g. via the respective driver circuit. The operating system 224 may be configured to control the energy management interface 226, e.g. by applying a transmission power control signal to the energy management interface 226. The energy management interface 226 (e.g. an energy management interface object) in general may be configured to receive the transmission power control signal from the operating system 224 and to provide a notification to the one or more communication circuits 206 based on the received transmission power control signal to control e.g. the transmission power of the one or more communication circuits 206. Depending on the respective implementation and the desired application, as will be described in more detail below, the energy management interface 226 (e.g. an energy management interface object) may be configured to receive a human proximity signal (which may be one example of a transmission power control signal) from the operating system 224 and to provide a notification to the one or more communication circuits based on the received human proximity signal. In another example, the energy management interface 226 (e.g. an energy management interface object) may be configured to receive an interference mitigation signal (which may be another example of a transmission power control signal) from the operating system 224 and to provide a notification to the one or more communication circuits based on the received interference mitigation signal.

The energy management interface 226 may include or be an Advanced Configuration and Power Interface (ACPI) 226, such as e.g. ACPI v2.0, ACPI v3.0, ACPI v4.0, ACPI v5.0, or ACPI v6.0, or the like. As shown in FIG. 2 and as will be described in more detail below, the ACPI 226 may include an ACPI driver and ACPI Machine Language (AML) interpreter 228, one or more ACPI registers 230, an ACPI BIOS (Basic Input Output System) component 232, and a plurality of ACPI tables 234. Each of the one or more ACPI registers 230, the ACPI BIOS component 232, and the plurality of ACPI tables 234 is bidirectionally communicativley coupled to the ACPI driver and ACPI AML interpreter 228. Furthermore, the ACPI driver and ACPI AML interpreter 228 may be bidirectionally communicativley coupled to each of the driver circuits, e.g. driver circuit 216, 218, 220, 222.

Furthermore, the communication device 200 may further include a BIOS component 236, a processor 238, e.g. a microprocessor, e.g. an application processor, and one or more sensors, e.g. one or more Specific Absorption Rate (SAR) sensors 240. The BIOS component 236 may be bidirectionally communicativley coupled to the processor 238. Furthermore, the processor 238 may be bidirectionally communicativley coupled to or at least partially implement the operating system 224, and therein, e.g. energy management interface 226, e.g. the ACPI registers 230, the ACPI BIOS component 232, and the plurality of ACPI tables 234. Moreover, the one ore more SAR sensors 240 may be bidirectionally communicativley coupled to the energy management interface 226, e.g. to the ACPI driver and AML interpreter 228 thereof.

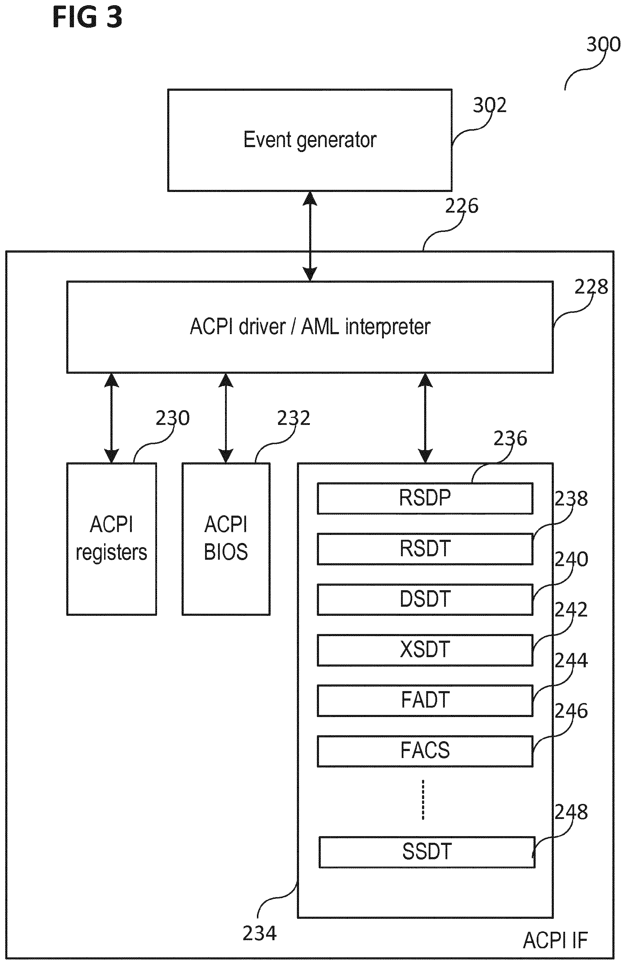

With reference now to FIG. 3, the ACPI interface structure will be described in more deatil in a block diagram 300. Furthermore, FIG. 3 shows an event generator 302, which may be configured to generate an event (e.g. the transmit power control signal) and apply this event to the ACPI interface, e.g. to the ACPI driver and AML interpreter 228. The event generator 302 may e.g. be or include one or more SAR sensor(s) 240 (detecting the proximity of a user to the communication device) and/or one or more of the communication circuits 206, e.g. the WiFi communication circuit 212 (detecting signal interference due to simultaneous operation of two or more of the communication circuits 206).

The ACPI interface 226 defines a platform-independent interface for hardware discovery, configuration, power management and monitoring. Illustratively, ACPI interface 226 may bring the power management under the control of the operating system 224. The ACPI interface 226 may at least partially be implemented in firmware. As mentioned above, the ACPI interface 226 has three main components: the ACPI registers 230, the ACPI BIOS component 232, and the ACPI tables 234. The ACPI interface 226 implements little of its functionality in the ACPI BIOS component 232 code, whose main role is to load the ACPI tables 234 in system memory (not shown) of the communication device 200. Instead, most of the firmware ACPI functionality is provided in ACPI Machine Language (AML) bytecode stored in the ACPI tables 234. To make use of these ACPI tables 234, the operating system 224 may provide an interpreter for the AML bytecode, e.g. the ACPI driver and AML interpreter 228. The AML interpreter 228 implementation may be provided by the ACPI Component Architecture (ACPICA). At the BIOS development time, AML code may be compiled from the ASL (ACPI Source Language) code. The ACPI interface 226 may also provide a hardware enumerator, mostly implemented in the DSDT (Differentiated System Description Table) ACPI table 234, which will be described in more detail below.

The operating system 224 may be an operating system power management (OSPM)-compatible operating system and may activate the ACPI interface 226, and then it may take over and may have exclusive control of all aspects of power management and device configuration within the ACPI interface 226. The OSPM implementation of the operating system 224 may expose an ACPI-compatible environment to device drivers, such as driver circuits 216, 218, 220, 222, which exposes certain system, device and processor states.

In various aspects of this disclosure, the ACPI interface 226 defines the following four Global "Gx" states and six Sleep "Sx" states for the ACPI-compliant communication device:
- G0 (S0), Working:
   "Awaymode" is a subset of S0, where monitor is off but background tasks are running.
- G1, Sleeping:
   Divided into four states, S1 through S4:
   -- S1, Power on Suspend (POS):
      All the processor caches of the communication device are flushed, and the central processing unit(s) (CPU(s)) (e.g. the processor 238) stops executing instructions. The power to the CPU(s) and RAM (Random Access Memory) of the communication device is maintained. Devices that do not indicate they must remain on, may be powered off.
   -- S2:
      CPU powered off. Dirty cache is flushed to RAM.
   -- S3, commonly referred to as Standby, Sleep, or Suspend to RAM (STR):
      RAM remains powered.
   -- S4, Hibernation or Suspend to Disk:
      All content of the main memory is saved to non-volatile memory such as a hard drive, and is powered down.
- G2 (S5), Soft Off:
   G2/S5 is almost the same as G3 Mechanical Off, except that the power supply unit (PSU) of the communication device still supplies power, at a minimum, to the power button to allow return to S0. A full reboot is required. No previous content is retained. Other components may remain powered so the computer can "wake" on input from the keyboard, clock, modem, LAN, or USB device.
- G3, Mechanical Off:
   The communication device's power has been totally removed via a mechanical switch (as on the rear of a PSU). The power cord can be removed and the system is safe for disassembly (typically, only the real-time clock continues to run - using its own small battery).

Furthermore, the ACPI interface 226 may define a Legacy state: the state on an operating system which does not support ACPI. In this state, the hardware and power are not managed via ACPI, effectively disabling ACPI.

In various aspects of this disclosure, the ACPI interface 226 defines the following communication device states D0-D3 which are device-dependent:
- D0 or Fully On is the operating state.
- D1 and D2 are intermediate power-states whose definition varies by communication device.
- D3 or Off has the device powered off and unresponsive to its bus.
   -- D3 Hot & Cold: The D3 state is further divided into D3 Hot (has aux power), and D3 Cold (no power provided). A communication device in D3 Hot state can assert power management requests to transition to higher power states.

In various aspects of this disclosure, the ACPI interface 226 defines the following processor power (e.g. CPU power) states C0-C3 which are device-dependent:
- C0 is the operating state.
- C1 (often known as Halt) is a state where the processor is not executing instructions, but can return to an executing state essentially instantaneously. All ACPI-conformant processors support this power state. Some processor types, such as the Pentium 4, may also support an Enhanced C1 state (C1E or Enhanced Halt State) for lower power consumption.
- C2 (often known as Stop-Clock) is a state where the processor maintains all software-visible state, but may take longer to wake up. This processor state is optional.
- C3 (often known as Sleep) is a state where the processor does not need to keep its cache coherent, but maintains other state. Some processor types have variations on the C3 state (Deep Sleep, Deeper Sleep, etc.) that differ in how long it takes to wake the processor. This processor state is optional.
- Additional states are defined by manufacturers for some processors. For example, Intel's Haswell platform has states up to C10, where it distinguishes core states and package states.

While a communication device or a processor of the communication device operates (D0 and C0, respectively), it can be in one of several power-performance states. These states are implementation-dependent. Though, P0 is always the highest-performance state; with P1 to Pn being successively lower-performance states, up to an implementation-specific limit of n no greater than 16. P-states also have become known as SpeedStep in Intel processors, as PowerNow! or Cool'n'Quiet in AMD processors, and as PowerSaver in VIA processors.
- P0 max power and frequency.
- P1 less than P0, voltage/frequency scaled.
- P2 less than P1, voltage/frequency scaled.
- ...
- Pn less than P(n-1), voltage/frequency scaled.

Furthermore, the ACPI interface may define a plurality of ACPI tables 234 that provide the interface between an ACPI-compliant operating system (e.g. the operating system 224), and system firmware. The ACPI tables 234 may allow the description of system hardware of the communication device 200 in a platform-independent manner, and are presented as either fixed-formatted data structures or in AML. The main AML table is the DSDT (differentiated system description table). The Root System Description Pointer is located in a platform-dependent manner, and describes the rest of the ACPI tables 234.

By way of example, the following ACPI tables 234 may be provided:
- RSDP (Root System Description Pointer) table 236:
   This table includes a pointer to the other tables and the communication device, e.g. its main board, stores it in the EBDA (Extended Bios Data Area) or in the memory area from E0000h to FFFFFh. The ACPI driver of the operating system 224 searches for the "magic" character string "RSD PTR" in the memory and thus receives the addresses of the RSDP table 236 and of the other ACPI tables.
- RSDT (Root System Description Table) table 238:
   The RSDT table 238 includes one or more references to other tables, which include information about processes - in accodance with specific standards - which are used in the system. By way of example, the reference to the Fixed ACPI Description Table (FADT) is usually present in the ACPI system.
- DSDT (Differentiated System Description Table) table 240:
   The DSDT table 240 may describe implemented system functions such as e.g. energy management, plug and play and cooling in so-called definition blocks. The definition blocks include, in addition to driving information, control function encoded in AML. The definition blocks inserted in the DSDT for ACPI functions form the basis for the proper operation of the ACPI functions in the system. The DSDT Differentiated definition block will be loaded at system boot process and remains in the memory.
- XSDT (Extended System Description Table) table 242:
   The XSDT table 242 includes reference to additional specifications of the configuration and the system implementation.
- FADT (Fixed ACPI Description Table) table 244:
   The FADT table 244 includes static, system-related information for the energy management, as well as pointer to the firmware ACPI Control Structure (FACS) and the Differentiated System Description Table (DSDT) table 240.
- FACS (Firmware ACPI Control Structure) table 246:
   The FACS table 246 stored the system specific data of the ACPI inserted by the BIOS. These data form the basis for the communication between the operating system 224 and the firmware.
- Secondary System Description Table (SSDT) table(s) 248:
   The SSDT table(s) 248 is/are a continuation of the DSDT. Multiple SSDT tables 248 can be used as part of a platform description. After the DSDT table 240 is loaded into the ACPI namespace, each SSDT table 248 listed in the RSDT table 238 / XSDT table 242 with a unique manufacturer table ID is loaded. This allows the manufacturer to provide the base support in one table, while adding smaller system options in other tables.

The ACPI tables 234 thus include various table entries. In various aspects of this disclosure, various devices may be described and thus defined as table entries, which may be referred to as ACPI devices or ACPI device objects. Illustratively, various aspects use this mechanism to provide a well-defined virtual ACPI device with an ACPI event which can constitute the basis for notifying the operating system (OS) 224 and all wireless devices (e.g. the communication circuits 206 via the respective driver circuits) on a given system (i.e. communication device 200) without requiring multiple SAR sensors, physical routing or GPIO assignment for each communication circuit of the communication device. The operating system 224 may then map specific one or more notifications to each communication circuit of the communication device to invoke respective specificaction(s). As ACPI technology is as such widely adopted by many operating system and processor architectures, various aspects of this disclosure are more operating system agnostic and add greater flexibility for each operating system to implement the solution in the best possible mechanism for that operating system.

In various aspects of this disclosure, the virtual device and its specification, which will be described in more detail below, may be defined and stored in the SSDT table(s) 248.

As will also be described in more detail below, various aspects provide a virtual ACPI object component (e.g. a virtual ACPI object) with a device (communication circuit) specific method (DSM) defined e.g. by a manufacturer of the communication device or the device platform. The virtual ACPI object component may be distributed to OS vendors for their usage. The virtual ACPI object component may have assigned a unique hardware ID (unique in the address space of the manufacturer or the entire industry, for example). The hardware ID may be assigned by the manufacturer of the communication device or the device platform making it proprietary to the manufacturer. The manufacturer may also define an ACPI event ID which the ACPI standard can adopt for standardizing the event notification between a component of the communication device, e.g. about the human proximity or desired interference mitigation. The virtual ACPI device may map to any of the above mentioned detection device(s) if necessary or may remain virtual (using periodic polling or software-based events) in providing notification to the communication circuit(s) on the system, e.g. of the communication device 200. In another scenario of interference and/or channel inhibition (i.e. LTE/WiFi in ISM band or Wifi/BT, for example), the virtual ACPI device may allow for detecting interference in operations and sending soft message(s) to concerned devices (e.g. the respectively concerned communication circuits) for further action (i.e. delay transmission / channel hopping, etc., for example) where the specific device block (in other words the specific ACPI device of a respective communication circuit) can take appropriate actions in real time messaging using dedicated hardware blocks.

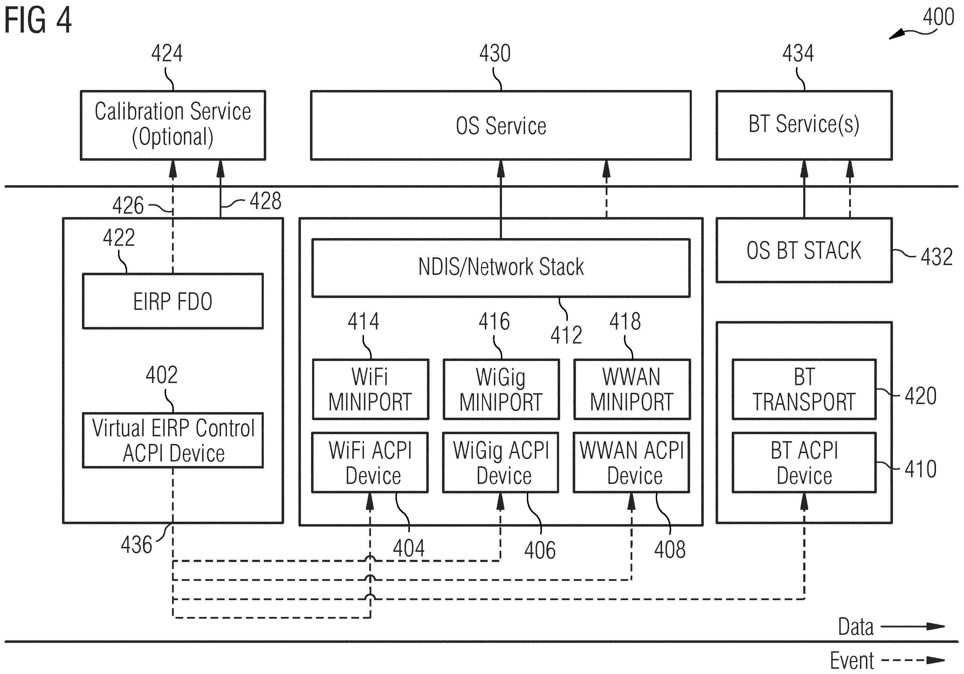

FIG. 4 shows a block diagram 400 illustrating the data and event notification message flow between various components of the operating system 226 and of the energy management interface 226.

As shown in FIG. 4, a Virtual EIRP Control ACPI device 402 may be created and thus provided in the energy management interface 226. The communication circuits 206 on the platform, e.g. within the communication device 200 may maintain a corresponding ACPI device object component in their device stack respectively when enumerated by the BIOS. In other words, the energy management interface 226 may include a plurality of ACPI device objects, e.g. one ACPI device object component for each provided communication circuit. By way of example, the energy management interface 226 may include a WiFi ACPI device 404 for a WiFi communication circuit (e.g. for the WiFi communication circuit 212), a WiGig ACPI device 406 for a WiGig communication circuit (not shown in FIG. 2), a WWAN (e.g. LTE or UMTS) ACPI device 408 for a WWAN communication circuit (e.g. for the LTE communication circuit 208 or for the UMTS communication circuit 214), and a BT ACPI device 410 for a BT communication circuit (e.g. for the BT communication circuit 218). Furthermore, an NDIS/Network stack 412 may be provided to implement the respective ports (e.g. WiFi mini port 414, WiGig mini port 416, or WWAN mini port 418) and upper layer protocol stack(s) of the respective communication protocols. Furthermore, a BT transport protocol stack circuit 420 may be provided communicatively coupled to the BT ACPI device 410. Furthermore, the energy management interface 206 may include or implement an EIRP Feature Data Object (FDO) 422 (which may be considered as one example of a human proximity determination circuit) configured to generate a human proximity signal indicating that proximity of a human body part is detected, e.g. that a human or human body part is closer to the communication device than a predefined distance threshold and to provide the human proximity signal 426 to the operating system 224, e.g. to an optional calibration service circuit 424 within the operating system 224, possibly together with one or more sensor signals 428 provided by one or more SAR sensors (e.g. the SAR sensor 240). In general, any other circuit, such as e.g. the event generator 302 may generate the human proximity signal and may provide it to the operating system, which provides it to the virtual ACPI device. The operating system 224 may further include an operating system service circuit 430 communicately coupled to the driver circuits 216, 218, 220. Illustratively, the operating system service circuit 430 may be considered as the interface between the energy management interface 206 and the driver circuits 216, 218, 220. Furthermore, an operating system BT stack 432 is provided implementing at least some of the BT protocol stack functions, which operating system BT stack 432 is communicativly coupled to a BT service circuit 434 and via that to the BT driver circuit 222. Illustratively, the BT service service circuit 434 may be considered as the interface between the energy management interface 206 and the BT driver circuit 222.

The PCIe subsystem makes the device "sit" on one of the root ports. As the human proximity is detected, e.g. by one or more SAR sensors 240, the Virtual EIRP Control ACPI device may generate an ACPI event 436 (which may also be referred to as an ACPI event message 436) which notifies the attached communication circuits, e.g. via the respective ACPI devices, e.g. via the ACPI device 404, the WiGig ACPI device 406, the, and the BT ACPI device 410.

Thus, illustratively, one or more SAR sensors 240 generate a sensor signal in case it detects a human body in close proximity to the communication device (it is to be noted that the calibration of the sensors 240 and thus the setting of the respective threshold values to determine close proximity of a human is application dependent and may be freely defined by a user or a device manufacturer, for example). The EIRP FDO 422 may then forward the sensor signal(s) 428 to the calibration service circuit 424 (as an alternative or in addition, the EIRP FDO 422 may generate a human proximity signal 426 and send it to the calibration service circuit 424), which in turn may provide the human proximity signal 426 to the Virtual EIRP Control ACPI device 402. The Virtual EIRP Control ACPI device 402 implements a DSM and may generate the ACPI event message 436 and send it to one or more implemented ACPI devices 404, 406, 408, 410, and via them, to the respective communication circuit(s) 206. This may implement a dynamic EIRP control mechanism in a communication device using a virtual ACPI object component in the ACPI interface. Illustratively, the ACPI DSM method implemented in the virtual ACPI device may dynamically generate one or more events for EIRP. The event mechanism may be implemented using the generic ACPI event mechanisms. Furthermore, a specific event notification mechanism may be defined within the ACPI interface in a future version thereof. In this context, it is to be noted that it is provided that the ACPI enumerated device such as e.g. the virtual ACPI device 402 may be configured to send a notification to other (Wireless) devices, i.e. wireless communication circuits.

As an alternative to the SAR sensor 240, the sensing of proximity and coexistence (interference, as will be described in more detail below) can be initiated by one or more of the communication circuits 206 (e.g. by the WiFi communication circuit 212).

In various aspects of this disclosure, the virtual ACPI device object component (e.g. the virtual ACPI device object) 402 may represent the ACPI device object of the SAR sensor 240 or any other interference detection based mechanism or device or circuit. By way of example, in case of a WWAN Driver, the DSM method implemented in the virtual ACPI device object 402 may follow an event mechanism that notifies some or all the Wireless Devices (in other words the communication circuits) which need regulatory power reduction in the respective application.

The method of notification of the respective communication circuits may comply with the ACPI specification, and is given below for reference purposes as an implementation example.

It is to be noted that the BIOS (e.g. the BIOS 236) may carry out the creation of the virtual ACPI device object 402.

The created virtual ACPI device object 402 may include and thus may call the following function as described in the following AML code:

```
         //For WWAN or SAR or Virtual ACPI device namespace
         Driver can call_DSM at IRQL < DISPATCH_LEVEL
         From DSM method BIOS initiated notification (generic EIRP Reduction) to
         listed platform devices
         Scope(\_SB){
          Device(WWAN) // WWAN temperature sensor {
           Name(_HID, EISAID("INT3408"))
           Name(_UID, "WWAN")
         _DSM(NAME, XXX...){
         (GUID1)
         Fn1
         Fn2 //Defined to notify devices based on SAR input
         ///(notification)
         Notify(_SB.PCI0.RP01.WIFI,0x99) //Assumption is 0x99 [event] is defined
         as ACPI Power Reduction Event
         Notify(_SB.PCI0.RP01.BT,0x99)
         Notify(_SB.PCI0.RP01.WiGig,0x99)
         Fn3
         (GUID2)
         Fn1
         }
```

After and upon the virtual ACPI device object 402 has notified the ACPI devices assigned to the respective communication circuits of the communication device 100, the wireless communication devices (in other words the communication circuits) may be configured to take action on throttling/reducing or increasing the transmit power as necessary (and as e.g. implemented as a corresponding control process in the respectively assigned ACPI device object). The action processes related to energy management of the communication circuits in general, e.g. the action processes related to the operation state and/or the transmission power of the communication circuits, may be implemented within the ACPI device of the respective communication circuit, within the driver circuit of the respective communication circuit, or within the logic of the respective communication circuit, as desired.

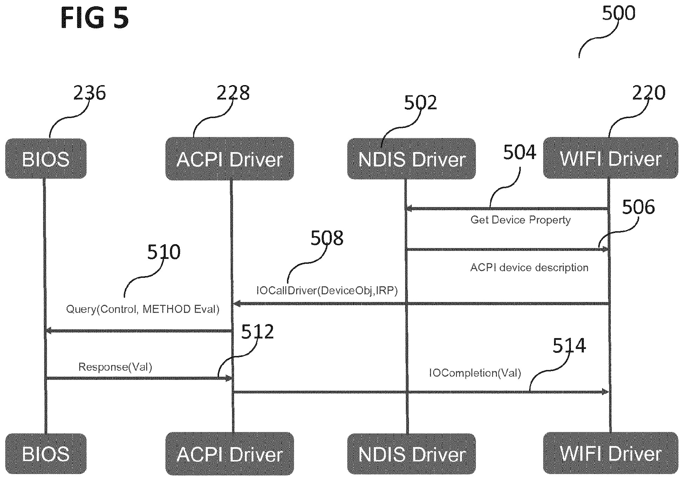

As an example, as shown in a message flow diagram 500 in FIG. 5, the process carried out and e.g. initiated by the WiFi driver 220 upon notification from the virtual ACPI device object 402 and implemented on a Windows operating system is illustrated. The process flow on WiFi protocol stack can take action on EIRP reduction/increase.

To illustrate the communication flow, it will now be assumed that the virtual ACPI device object 402 may send an ACPI event message 436 to the WiFi ACPI device 404. The WiFi ACPI device 228, 404 may forward the ACPI event message 436 to the assigned WiFi driver 220. Upon receipt of the ACPI event message 436, the WiFi driver 220 may determine the action it should take based on the ACPI event message 436. This may be done in that the WiFi driver 220 generates an ACPI device property request message 504 to request the ACPI description of the ACPI device assigned to the WiFi driver 220 and send the same to an NDIS driver 502, which may be part of the NDIS/Network stack 412. The NDIS driver 502 may determine the ACPI device description of the ACPI WiFi device 404, 228, e.g. from a communication device internal database or table, and generates a WiFi response message 506, which may include the ACPI device description of the ACPI WiFi device 404, 228, and sends the WiFi response message 506 to the WiFi driver 220. After having received the WiFi response message 506, the WiFi driver 220 may generate an ACPI call message 508 in the form of a Windows driver I/O request packet. The ACPI I/O call driver message 508 may include an identifier identifying the addressed ACPI device as well as an IRP parameter. The WiFi driver 220 may then send the ACPI I/O call driver message 508 to the respectively assigned ACPI driver 228, e.g. of the ACPI WiFi device object 404. The ACPI (WiFi) driver or the ACPI WiFi device object 404 may then carry out the respective DSM implemented in the ACPI (WiFi) driver or the ACPI WiFi device object 404 and generates a BIOS query message 510 with the request to e.g. receive a transmission power control value from the BIOS 236, and may send the BIOS query message 510 to the BIOS 236. Upon receipt of the BIOS query message 510, the BIOS determines the respectively requested transmission power control value and generates a BIOS response message 512 (which includes the requested transmission power control value) and sends the same back to the ACPI driver 228, e.g. the ACPI WiFi driver of the ACPI WiFi device 404. The ACPI driver 228 may then generate an ACPI I/O completion message 514, which may include the requested transmission power control value to be used by the WiFi driver 220, and then may send the same to the WiFi driver 220. After having received the ACPI I/O completion message 514, the WiFi driver 220 drives the WiFi communication circuit 212 to transmit radio signals using a transmission power in accordance with the requested transmission power control value.

In summary, the event (e.g. the ACPI event message 436) may be intercepted by the WiFi driver 220 which may pass it to the Networking Subsystem, which either may pass it to the ACPI method attached to the respective communication circuit for controlling e.g. communication circuit's transmit power or may pass it to the OS or the internal interface/interconnect connected to the communication circuit on the platform.

In another case, which is similar to the example as described above, the ACPI event notification mechanisms by providing the virtual ACPI device object 402, an interference mitigation may be provided. The sensing/collaboration for interference mitigation may be done by any of the wireless devices (i.e. by any one of the communication circuits) and the notification may be sent to the virtual ACPI device (e.g. the virtual ACPI device object 402) for further general notification e.g. of the driver circuits or the communication circuits.

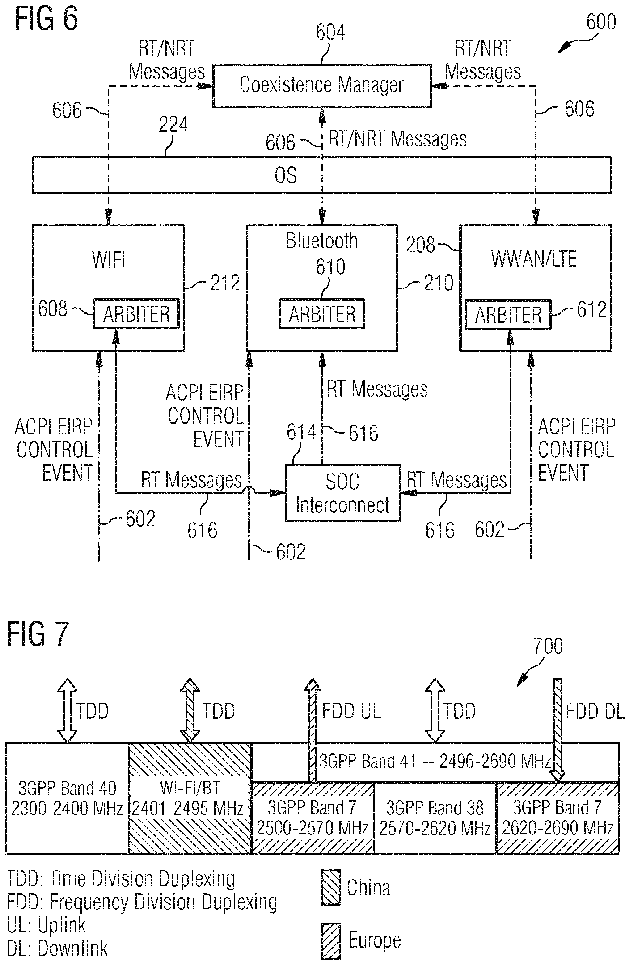

FIG. 6 shows a block diagram 600 illustrating a real-time messaging as well as a non-real-time messaging which may be provided by the communication device, e.g. by the communication device 200.

As mentioned earlier, the communication circuits themselves and/or the SAR sensor(s) and/or other devices or circuits within the communication device may determine a too high proximity between the communication device 200 and the human body and/or a too high radio interference due to the operation of the communication circuits 206 of the communication device 200 (e.g. RSSI based). In other words, "proximity" and/or "interference" (e.g. communication device "self-interference") may be detected by one or more components or circuits of the communication device 200.

As the proximity and RSSI based sensitivity is detected the Wireless device (i.e. a respective communication circuit) may send a non-real-time message to the virtual ACPI device object 402 for notifying the rest of the wireless communications device (i.e. the other communication circuits) by evaluating, in other words carrying out the ACPI method implemented in the virtual ACPI device object 402 which is already present on the platform for notification.

By way of example, as shown in FIG. 6, the virtual ACPI device object 402 after having received the above-mentioned non-real-time message sends an ACPI interference mitigation message 602 to some or all communication circuits, e.g. to the communication circuits involved in a predefined interference mitigation process. By way of example, the virtual ACPI device object 402 may send the ACPI interference mitigation message 602 to the WiFi communication circuit 212 (e.g. via the respective ACPI WiFi device 404, etc.), the BT communication circuit 210 (e.g. via the respective ACPI BT device 410, etc.), and to the WWAN LTE communication circuit 208 (e.g. via the respective ACPI WWAN LTE device 408, etc.). The communication circuits 208, 210, 212 communicate (e.g. via the operating system 224) with an interference coexisting manager circuit 604 via real-time and/or non-real-time messages 606 in order to control the transmission times and/or transmission power in accordance with which the communication circuits 208, 210, 212 will operate and transmit radio signals. Furthermore, an arbiter circuit may be provided for each communication circuit of the communication circuits 208, 210, 212. By way of example, a WiFi arbiter circuit 608 may be provided for the WiFi communication circuit 212, a BT arbiter circuit 610 may be provided for the BT communication circuit 210, and an LTE arbiter circuit 612 may be provided for the WWAN LTE communication circuit 208. Furthermore, a system-on-chip (SoC) interconnect 614 may be provided connecting the arbiter circuits 608, 610, 612. The arbiter circuits 608, 610, 612 may be configured to communicate with the SoC interconnect 614 also via real-time and/or non-real-time messages 616 to carry out the respective interference mitigation control mechanism using the above described virtual ACPI device object notification mechanism.

For example in the following bands (as shown in a frequency band diagram 700 in FIG. 7) where the interference is seen among wireless devices (e.g. the communication circuits), a respective communication circuit of the communication device may send a soft message to a virtual ACPI device (e.g. the virtual ACPI device object 402). In case of WiFi/BT interference in band 2401-2495 MHz, the WiFi communication circuit 212 may communicate to the BT communication circuit 210 using a non-real-time method by executing its own device specific method (DSM) implemented e.g. in its corresponding ACPI device (e.g. the WiFi ACPI device object 404) from where the virtual ACPI device may inform all the concerned communication circuits to respect the interference mitigation rules.

The non-real-time event of the virtual ACPI device can be translated to one or more real-time actions like channel inhibition, Tx power transmission throttling or delay in transmission on particular communication circuits, etc.

In various aspects of this disclosure, a communication circuit may use a non-real-time method by executing its own device specific method (DSM) (of its assigned ACPI device) when the virtual ACPI device (e.g. the virtual ACPI device object 402) informs all the concerned communication circuit to respect the interference mitigation rule(s).

For example, a Wifi communication circuit (e.g. the WiFi communication circuit 212) operating in 2.4 GHz frequency band may inform (other) communication circuits of the communication device (e.g. 200) of interference via its DSM by notifying the virtual ACPI device DSM (e.g. the virtual ACPI device object 402 DSM), as shown in the AML code below. This virtual ACPI device DSM (e.g. the virtual ACPI device object 402 DSM) in turn may notify the Bluetooth communication circuit (e.g. the BT communication circuit 210) (see Fn2) to take action, which the Bluetooth communication circuit may interpret as a channel inhibition request.

This scenario may be implemented e.g. by the following AML code:

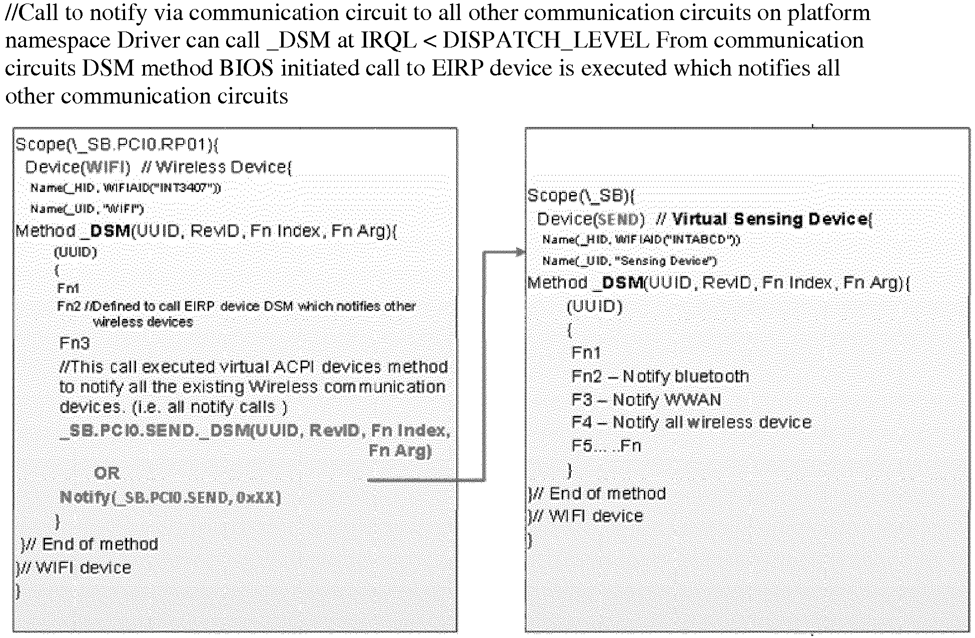

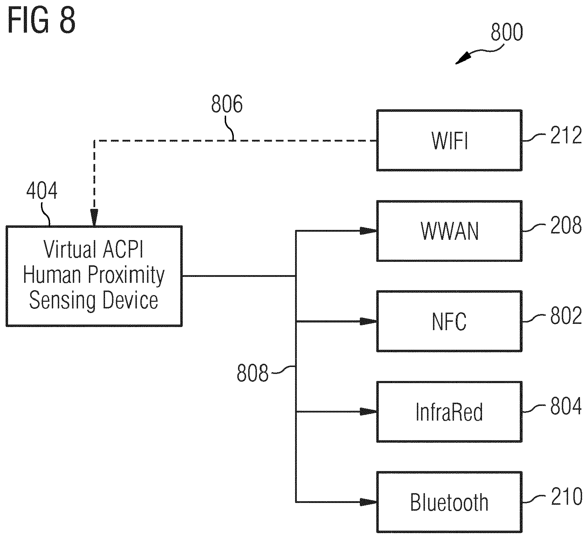

FIG. 8 shows a block diagram 800 illustrating the communication flow between various components or circuits of the communication device 200 in accordance with various aspects of this disclosure.

In addition to the communication circuits 208, 210, and 212 of FIG. 2, FIG. 8 shows additional optional communication circuits, namely an Near Field Communication (NFC) communication circuit 802 configured to provide a signal transmission and receiving via an NFC communication technology,and an InfraRed (IR) communication circuit 804 configured to provide a signal transmission and receiving via an IR communication technology.

As shown in FIG. 8, by way of example, the WiFi communication circuit 212 may detect the necessity of interference mitigation or any other reason for the necessity of transmission power control of itself and other communication circuits 208, 210, 212, 802, 804 of the communication device 200. In order to inform the other communication circuits 208, 210, 212, 802, 804 about the transmission power control, in general of the operation control of the other communication circuits 208, 210, 212, 802, 804, the WiFi communication circuit 212 may send a soft message 806 to the energy management interface, namely to the virtual device implemented in the energy management interface, e.g. to the virtual ACPI device object 404. The virtual ACPI device object 404 may, upon receipt of the soft message 806, carry out its DSM, and, by doing this, e.g. inform all the other communication circuits 208, 210, 212, 802, 804 about the respective control of the operation of the communication circuits 208, 210, 212, 802, 804. The control may be, dependent on the implemented DSM of the virtual ACPI device object 404, a "global" control of all the other communication circuits 208, 210, 212, 802, 804, or an individual control of the other communication circuits 208, 210, 212, 802, 804 (or a group based control of various groups of the other communication circuits 208, 210, 212, 802, 804. In FIG. 8, the virtual ACPI device object 404 may send a notification message 808 to all the other communication circuits 208, 210, 212, 802, 804.

In the following, some primitive definitions are provided, which may be used in one or more of the above examplary implementations:
- Wireless Power Calibration Device (Virtual or Real device for eventing):
The following section illustrate the operation and definition of the control method based Wireless Power Calibration Device (WPC).
- Wireless Power Calibration (_WPC)
The wireless power calibration can support the_WPC methods per participant device to calibrate power and notify the participant device as the case me be. (i.e. Either direct proximity based power calibration or notification for interference mitigation).
The_WPC method of the WPC device functions as a notifier to the participant wireless devices and indicates either the messaging is for interference mitigation or direct power calibration.
- Return Value:
0x00 - Direct Proximity Power Control
0x01 - Interference Mitigation Control
0x02 - Operational Band Change Control
0xFF - Reserved

- Wireless Power Polling (_WPP)
This optional method evaluates the recommended polling frequency (in tenths of seconds) for this Wireless Power Calibration device. A value of zero - or the absence of this object when other WPC objects are defined - indicates that the OS does not need to poll the WPC device in order to detect meaningful changes in Wireless power calibration (the hardware is capable of generating asynchronous notifications).
- Argument:
None
- Return:
An Integer containing the recommended polling frequency in tenths of seconds. A value of zero indicates that polling is not required.
- Wireless Power Calibration Event
To communicate the changes in wireless power transmission or interference mitigation to the OSPM. AML code should issue a Notify (wpc_device, 0xXX) whenever a change in power calibration or interference mitigation is required to happen. The OS receives this notification and may call the_WPD control method to determine the notification action associated with it. Event generated may contain the information related to associate action that recipient devices need to take.
WPD notification should occur whenever a change in power transmission needed either as a result of human proximity or interference mitigation. The granularity of the interference mitigation and power transmission can be address as per the operational device characteristics.
The WPC notification for interference mitigation will generate pairwise event among participant devices or multicast is if the interference is observed in all the bands of operations involving the wireless devices.
- Wireless Power Control Notification Values:

| Hexadecimal value | Description |
|---|---|
| 0x80 | Proximity based power calibration |
| 0x81 | Interference mitigation between WiFi (802.11) and Bluetooth device |
| 0x82-0x85 | Reserved for WiFi/BT interference mitigation for later use |
| 0x86 | Interference mitigation between WiFi (802.11) and LTE/3GPP bands |
| 0x87-0x90 | Reserved for WiFi/LTE/3GPP interference mitigation for later use |
| 0x91 | Interference mitigation between Bluetooth and LTE/3GPP devices |
| 0x92-0x95 | Reserved for Bluetooth and LTE/3GPP interference mitigation for later use |

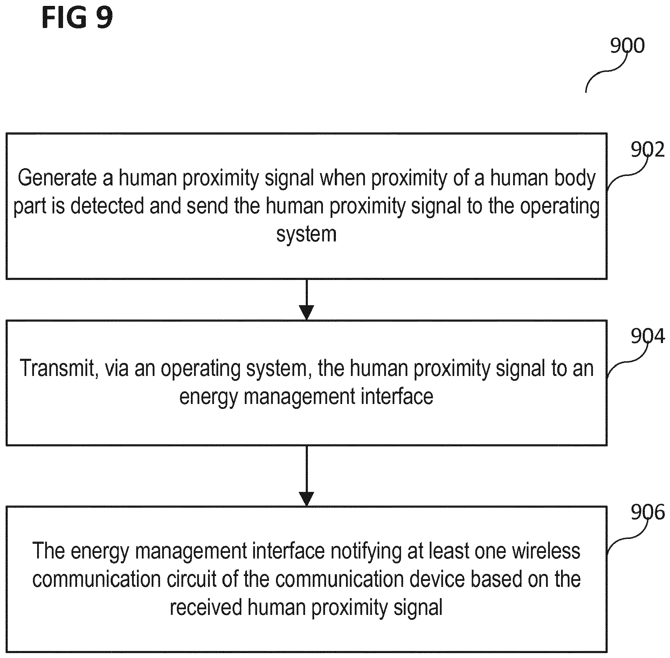

FIG. 9 shows a flow diagram illustrating a method 900 of operating a communication device in accordance with various aspects of this disclosure. The method may include, in 902, generating a human proximity signal when it detects proximity of a human body part, e.g. when it is determined that a human is closer to the communication device than a predefined distance threshold, and sending the human proximity signal to the operating system, in 904, transmitting, via an operating system, the human proximity signal to an energy management interface, e.g. to an energy management interface object of the energy management interface. The energy management interface may provide an interface for hardware recognition, device configuration and energy management. The method may further include, in 906, the energy management interface, e.g. the energy management interface object notifying at least one wireless communication circuit of the communication device based on the received human proximity signal.

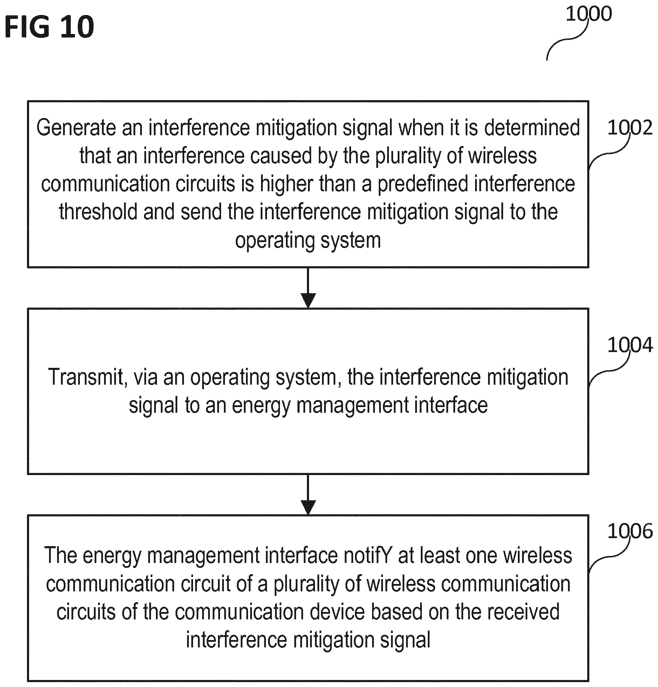

FIG. 10 shows a flow diagram illustrating a method 1000 of operating a communication device in accordance with various aspects of this disclosure. The method may include, in 1002, generating an interference mitigation signal when it is determined that an interference caused by the plurality of wireless communication circuits is higher than a predefined interference threshold and sending the interference mitigation signal to the operating system, in 1004, transmitting, via an operating system, the interference mitigation signal to an energy management interface, e.g. to an energy management interface object of the energy management interface. The energy management interface may provide an interface for hardware recognition, device configuration and energy management. The method may further include, in 1006, the energy management interface, e.g. the energy management interface object, notifying at least one wireless communication circuit of a plurality of wireless communication circuits of the communication device based on the received interference mitigation signal.

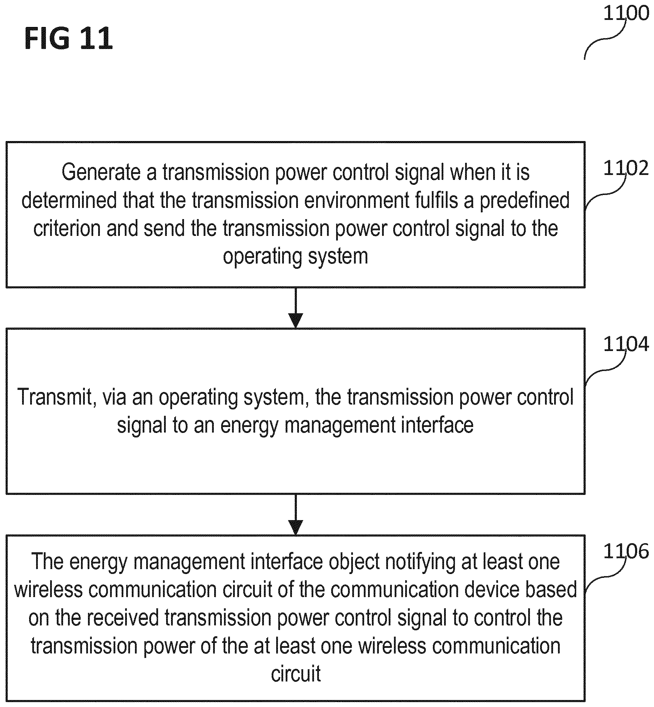

FIG. 11 shows a flow diagram illustrating a method 1100 of operating a communication device in accordance with various aspects of this disclosure. The method may include, in 1102, generating a transmission power control signal when it is determined that the transmission environment fulfils a predefined criterion and sending the transmission power control signal to the operating system, in 1104, transmitting, via an operating system, the transmission power control signal to an energy management interface, e.g. to an energy management interface object of the energy management interface. The energy management interface may provide an interface for hardware recognition, device configuration and energy management. The method may further include, in 1106, the energy management interface, e.g. the energy management interface object, notifying at least one wireless communication circuit of the communication device based on the received transmission power control signal to control the transmission power of the at least one wireless communication circuit.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims and all changes which come within the meaning and range of equivalency of the claims are therefore intended to be embraced.

## Claims

1. A communication device (200), comprising:
a plurality of wireless communication circuits (206);
an energy management interface (226) coupled to the plurality of wireless communication circuits (206);
an operating system (224) executed on the communication device;
a human proximity determination circuit configured to generate a human proximity signal (426) upon detecting proximity of a human body part and configured to send the human proximity signal (426) to the operating system (224);
wherein the energy management interface (226) is configured:
to receive the human proximity signal (426) from the operating system (224), and
to notify the plurality of wireless communication circuits (206) based on the received human proximity signal (426),
wherein one or more wireless communication circuits (208, 210, 212, 214, 802, 804) of the plurality of wireless communication circuits (206) are configured to, when an interference is detected among the plurality of wireless communication circuits (206), send a non-real-time message to the energy management interface (226), and
wherein the energy management (226) is further configured to, upon receipt of the non-real-time message, inform some or all of the other wireless communication circuits (208, 210, 212, 214, 801, 804) about a respective control of an operation of the wireless communication circuits (206),
wherein the energy management interface (226) is configured to notify the plurality of wireless communication circuits (206) to control a transmission power used by the plurality of wireless communication circuits (206).

2. The communication device (200) of claim 1,
wherein the energy management interface (226) is an Advanced Configuration and Power Interface.

3. The communication device (200) of claim 2, further comprising:
a memory;
a basic input/output system (BIOS) configured to load one or more tables of the Advanced Configuration and Power Interface into the memory.

4. The communication device of any one of claims 1 to 3, further comprising:
a plurality of wireless communication circuit drivers (216, 218, 220, 222) coupled with the plurality of wireless communication circuits (206), respectively, and
configured to drive the plurality of wireless communication circuits (206).

5. The communication device of claim 4, further comprising:
a plurality of energy management interface wireless communication circuit drivers (228) coupled with the plurality of wireless communication circuit drivers (216, 218, 220, 222), respectively, and assigned to the plurality of wireless communication circuit drivers (216, 218, 220, 222).

6. The communication device of any one of claims 1 to 5,
configured as a communication terminal device (102, 116, 130).

7. The communication device of any one of claims 1 to 6,
wherein the energy management interface (226) is configured to notify the plurality of wireless communication circuits (206) to control a transmission scheduling for the plurality of wireless communication circuits (206).

8. A method of operating a communication device (200), the method comprising:
generating a human proximity signal (426) when proximity of a human body part is detected and sending the human proximity signal (426) to an operating system (224) executed on the communication device (200);
transmitting, via the operating system (224), the human proximity signal (426) to an energy management interface (226);
the energy management interface (226) notifying a plurality of wireless communication circuits (206) of the communication device (200) based on the received human proximity signal (426),
wherein one or more wireless communication circuits (208, 210, 212, 214, 801, 804) of the plurality of wireless communication circuits (206), when an interference is determined among the plurality of wireless communication circuits (206), send a non-real-time message to the energy management interface (226), wherein, the energy management interface (226), upon receipt of the non-real-time message, further informs at least one of the other wireless communication circuits (208, 210, 212, 214, 801, 804) about a respective control of an operation of the wireless communication circuits (206),
wherein the energy management interface (226) notifies the plurality of wireless communication circuits (206) to control a transmission power used by the plurality of wireless communication circuits (206).

9. The method of claim 8,
wherein the energy management interface (226) is an Advanced Configuration and Power Interface.

10. The method of any one of claims 8 or 9, further comprising:
a plurality of wireless communication circuit drivers (216, 218, 220, 222), which are coupled with the plurality of wireless communication circuits (206), respectively,
driving the plurality of wireless communication circuits (206).

11. The method of any one of claims 8 to 10,
wherein the communication device (200) is a communication terminal device (102, 116, 130).

12. The method of any one of claims 8 to 11,
wherein the energy management interface (226) notifies the plurality of wireless communication circuits (206) to control a transmission scheduling for the plurality of wireless communication circuits (206).

## Patentansprüche

1. Kommunikationsvorrichtung (200), umfassend:
eine Mehrzahl von Drahtloskommunikationsschaltungen (206) ;
eine Energieverwaltungsschnittstelle (226), die mit der Mehrzahl von Drahtloskommunikationsschaltungen (206) gekoppelt ist;
ein Betriebssystem (224), das auf der Kommunikationsvorrichtung ausgeführt wird;
eine Schaltung zur Bestimmung menschlicher Nähe, die ausgelegt ist, um ein Signal menschlicher Nähe (426) beim Detektieren der Nähe eines menschlichen Körperteils zu erzeugen, und ausgelegt ist, um das Signal menschlicher Nähe (426) an das Betriebssystem (224) zu senden;
wobei die Energieverwaltungsschnittstelle (226) ausgelegt ist zum:
Empfangen des Signals menschlicher Nähe (426) vom Betriebssystem (224), und
Benachrichtigen der Mehrzahl von Drahtloskommunikationsschaltungen (206) basierend auf dem empfangenen Signal menschlicher Nähe (426), wobei eine oder mehrere Drahtloskommunikationsschaltungen (208, 210, 212, 214, 802, 804) der Mehrzahl von Drahtloskommunikationsschaltungen (206) ausgelegt sind, um, wenn eine Interferenz unter der Mehrzahl von Drahtloskommunikationsschaltungen (206) detektiert wird, eine Nicht-Echtzeit-Nachricht an die Energieverwaltungsschnittstelle (226) zu senden, und
wobei die Energieverwaltung (226) ferner ausgelegt ist, um bei Empfang der Nicht-Echtzeit-Nachricht einige oder alle der anderen Drahtloskommunikationsschaltungen (208, 210, 212, 214, 801, 804) über eine jeweilige Steuerung einer Operation der Drahtloskommunikationsschaltungen (206) zu informieren,
wobei die Energieverwaltungsschnittstelle (226) ausgelegt ist, um die Mehrzahl von Drahtloskommunikationsschaltungen (206) zu benachrichtigen, um eine Übertragungsleistung zu steuern, die von der Mehrzahl von Drahtloskommunikationsschaltungen (206) verwendet wird.

2. Kommunikationsvorrichtung (200) nach Anspruch 1, wobei die Energieverwaltungsschnittstelle (226) eine erweiterte Konfigurations- und Leistungsschnittstelle ist.

3. Kommunikationsvorrichtung (200) nach Anspruch 2, ferner umfassend:
einen Speicher;
ein grundlegendes Eingabe/Ausgabe-System (BIOS, Basic Input/Output System), das ausgelegt ist, um eine oder mehrere Tabellen der erweiterten Konfigurations- und Leistungsschnittstelle in den Speicher zu laden.

4. Kommunikationsvorrichtung nach einem der Ansprüche 1 bis 3, ferner umfassend:
eine Mehrzahl von Drahtloskommunikationsschaltungstreibern (216, 218, 220, 222), die jeweils mit der Mehrzahl von Drahtloskommunikationsschaltungen (206) gekoppelt sind und ausgelegt sind, um die Mehrzahl von Drahtloskommunikationsschaltungen (206) anzusteuern.

5. Kommunikationsvorrichtung nach Anspruch 4, ferner umfassend:
eine Mehrzahl von Energieverwaltungsschnittstellen-Drahtloskommunikationsschaltungstreibern (228), die jeweils mit der Mehrzahl von Drahtloskommunikationsschaltungstreibern (216, 218, 220, 222) gekoppelt sind und der Mehrzahl von Drahtloskommunikationsschaltungstreibern (216, 218, 220, 222) zugewiesen sind.

6. Kommunikationsvorrichtung nach einem der Ansprüche 1 bis 5, die als Kommunikationsendgerät (102, 116, 130) ausgelegt ist.

7. Kommunikationsvorrichtung nach einem der Ansprüche 1 bis 6,
wobei die Energieverwaltungsschnittstelle (226) ausgelegt ist, um die Mehrzahl von Drahtloskommunikationsschaltungen (206) zu benachrichtigen, um eine Übertragungsplanung für die Mehrzahl von Drahtloskommunikationsschaltungen (206) zu steuern.

8. Verfahren zum Betreiben einer Kommunikationsvorrichtung (200), das Verfahren umfassend:
Erzeugen eines Signals menschlicher Nähe (426), wenn die Nähe eines menschlichen Körperteils detektiert wird, und Senden des Signals menschlicher Nähe (426) an ein Betriebssystem (224), das auf der Kommunikationsvorrichtung (200) ausgeführt wird;
Senden des Signals menschlicher Nähe (426) über das Betriebssystem (224) an eine Energieverwaltungsschnittstelle (226);
Benachrichtigen durch die Energieverwaltungsschnittstelle (226) einer Mehrzahl von Drahtloskommunikationsschaltungen (206) der Kommunikationsvorrichtung (200) basierend auf dem empfangenen Signal menschlicher Nähe (426),
wobei eine oder mehrere Drahtloskommunikationsschaltungen (208, 210, 212, 214, 801, 804) der Mehrzahl von Drahtloskommunikationsschaltungen (206), wenn eine Interferenz unter der Mehrzahl von Drahtloskommunikationsschaltungen (206) bestimmt wird, eine Nicht-Echtzeit-Nachricht an die Energieverwaltungsschnittstelle (226) senden,
wobei die Energieverwaltungsschnittstelle (226) bei Empfang der Nicht-Echtzeit-Nachricht ferner wenigstens eine der anderen Drahtloskommunikationsschaltungen (208, 210, 212, 214, 801, 804) über eine jeweilige Steuerung einer Operation der Drahtloskommunikationsschaltungen (206) informiert,
wobei die Energieverwaltungsschnittstelle (226) die Mehrzahl von Drahtloskommunikationsschaltungen (206) benachrichtigt, um eine Übertragungsleistung, die von der Mehrzahl von Drahtloskommunikationsschaltungen (206) verwendet wird, zu steuern.

9. Verfahren nach Anspruch 8,
wobei die Energieverwaltungsschnittstelle (226) eine erweiterte Konfigurations- und Leistungsschnittstelle ist.

10. Verfahren nach einem der Ansprüche 8 oder 9, ferner umfassend:
eine Mehrzahl von Drahtloskommunikationsschaltungstreibern (216, 218, 220, 222), die jeweils mit der Mehrzahl von Drahtloskommunikationsschaltungen (206) gekoppelt sind, wobei die Mehrzahl von Drahtloskommunikationsschaltungen (206) angesteuert werden.

11. Verfahren nach einem der Ansprüche 8 bis 10,
wobei die Kommunikationsvorrichtung (200) ein Kommunikationsendgerät (102, 116, 130) ist.

12. Verfahren nach einem der Ansprüche 8 bis 11,
wobei die Energieverwaltungsschnittstelle (226) die Mehrzahl von Drahtloskommunikationsschaltungen (206) benachrichtigt, um eine Übertragungsplanung für die Mehrzahl von Drahtloskommunikationsschaltungen (206) zu steuern.

## Revendications

1. Dispositif de communication (200), comprenant :
une pluralité de circuits de communication sans fil (206) ;
une interface de gestion de l'énergie (226) couplée à la pluralité de circuits de communication sans fil (206) ;
un système d'exploitation (224) exécuté sur le dispositif de communication ;
un circuit de détermination de proximité humaine configuré pour générer un signal de proximité humaine (426) lors de la détection de la proximité d'une partie du corps humain et configuré pour envoyer le signal de proximité humaine (426) au système d'exploitation (224) ;
dans lequel l'interface de gestion de l'énergie (226) est configurée pour :
recevoir le signal de proximité humaine (426) à partir du système d'exploitation (224), et
notifier la pluralité de circuits de communication sans fil (206) sur la base du signal de proximité humaine reçu (426),
dans lequel un ou plusieurs circuits de communication sans fil (208, 210, 212, 214, 802, 804) de la pluralité de circuits de communication sans fil (206) sont configurés pour, lorsqu'une interférence est détectée parmi la pluralité de circuits de communication sans fil (206), envoyer un message en temps non réel à l'interface de gestion de l'énergie (226), et
dans lequel la gestion de l'énergie (226) est configurée en outre pour, lors de la réception du message en temps non réel, informer quelques-uns ou la totalité des autres circuits de communication sans fil (208, 210, 212, 214, 801, 804) au sujet d'une commande respective d'un fonctionnement des circuits de communication sans fil (206),
dans lequel l'interface de gestion de l'énergie (226) est configurée pour notifier la pluralité de circuits de communication sans fil (206) afin de commander une puissance de transmission utilisée par la pluralité de circuits de communication sans fil (206).

2. Dispositif de communication (200) de la revendication 1,
dans lequel l'interface de gestion de l'énergie (226) est une interface évoluée de configuration et d'alimentation.

3. Dispositif de communication (200) de la revendication 2, comprenant en outre :
une mémoire ;
un système d'entrée/sortie de base (BIOS) configuré pour charger une ou plusieurs tables de l'interface évoluée de configuration et d'alimentation dans la mémoire.

4. Dispositif de communication de l'une quelconque des revendications 1 à 3, comprenant en outre :
une pluralité de pilotes de circuits de communication sans fil (216, 218, 220, 222) couplée avec la pluralité de circuits de communication sans fil (206), respectivement, et configurée pour piloter la pluralité de circuits de communication sans fil (206).

5. Dispositif de communication de la revendication 4, comprenant en outre :
une pluralité de pilotes de circuits de communication sans fil de l'interface de gestion de l'énergie (228) couplée avec la pluralité de pilotes de circuits de communication sans fil (216, 218, 220, 222), respectivement, et attribuée à la pluralité de pilotes de circuits de communication sans fil (216, 218, 220, 222).

6. Dispositif de communication de l'une quelconque des revendications 1 à 5, configuré en tant que dispositif terminal de communication (102, 116, 130).

7. Dispositif de communication de l'une quelconque des revendications 1 à 6,
dans lequel l'interface de gestion de l'énergie (226) est configurée pour notifier à la pluralité de circuits de communication sans fil (206) de commander un ordonnancement de transmission pour la pluralité de circuits de communication sans fil (206).

8. Procédé d'exploitation d'un dispositif de communication (200), le procédé comprenant :
la génération d'un signal de proximité humaine (426) lorsque la proximité d'une partie du corps humain est détectée, et l'envoi du signal de proximité humaine (426) à un système d'exploitation (224) exécuté sur le dispositif de communication (200) ;
la transmission, par l'intermédiaire du système d'exploitation (224), du signal de proximité humaine (426) à une interface de gestion de l'énergie (226) ;
l'interface de gestion de l'énergie (226) notifiant une pluralité de circuits de communication sans fil (206) du dispositif de communication (200) sur la base du signal de proximité humaine reçu (426),
dans lequel un ou plusieurs circuits de communication sans fil (208, 210, 212, 214, 801, 804) de la pluralité de circuits de communication sans fil (206), lorsqu'une interférence est déterminée parmi la pluralité de circuits de communication sans fil (206) envoient un message en temps non réel à l'interface de gestion de l'énergie (226),
dans lequel, l'interface de gestion de l'énergie (226), lors de la réception du message en temps non réel, informe en outre au moins un des autres circuits de communication sans fil (208, 210, 212, 214, 801, 804) au sujet d'une commande respective d'un fonctionnement des circuits de communication sans fil (206),
dans lequel l'interface de gestion de l'énergie (226) notifie à la pluralité de circuits de communication sans fil (206) de commander une puissance de transmission utilisée par la pluralité de circuits de communication sans fil (206).

9. Procédé de la revendication 8,
dans lequel l'interface de gestion de l'énergie (226) est une interface évoluée de configuration et d'alimentation.

10. Procédé de l'une quelconque des revendications 8 ou 9, comprenant en outre :
une pluralité de pilotes de circuits de communication sans fil (216, 218, 220, 222) qui sont couplés avec la pluralité de circuits de communication sans fil (206), respectivement, pilotant la pluralité de circuits de communication sans fil (206).

11. Procédé de l'une quelconque des revendications 8 à 10,
dans lequel le dispositif de communication (200) est un dispositif terminal de communication (102, 116, 130) .

12. Procédé de l'une quelconque des revendications 8 à 11,
dans lequel l'interface de gestion de l'énergie (226) notifie à la pluralité de circuits de communication sans fil (206) de commander un ordonnancement de transmission pour la pluralité de circuits de communication sans fil (206).
